Europäisches Patentamt

European Patent Office

Office européen des brevets

(19)

(11) Veröffentlichungsnummer : **0 502 866 B1**

(12) # EUROPÄISCHE PATENTSCHRIFT

(45) Veröffentlichungstag der Patentschrift :
01.02.95 Patentblatt 95/05

(51) Int. Cl.$^6$ : **G01J 3/02, G01J 3/42**

(21) Anmeldenummer : **90916689.4**

(22) Anmeldetag : **19.11.90**

(86) Internationale Anmeldenummer :
**PCT/DE90/00887**

(87) Internationale Veröffentlichungsnummer :
**WO 91/08454 13.06.91 Gazette 91/13**

(54) **ZWEISTRAHL-SPEKTROMETER.**

(30) Priorität : **27.11.89 DE 3939148**

(43) Veröffentlichungstag der Anmeldung :
**16.09.92 Patentblatt 92/38**

(45) Bekanntmachung des Hinweises auf die
Patenterteilung :
**01.02.95 Patentblatt 95/05**

(84) Benannte Vertragsstaaten :
**AT BE CH DE FR GB IT LI NL SE**

(56) Entgegenhaltungen :
**EP-A- 0 340 915
US-A- 4 669 873
Applied Spectroscopy, vol. 42, no. 8, December 1988, Society for Applied Spectroscopy, J. Zhu et al: "Simultaneous dual-window measurements with a linear photodiode array detector", pages 1567-1571**

(56) Entgegenhaltungen :
**Patent Abstracts of Japan, vol. 12, no. 483 (P-802)(3330), 16 December 1988 & JP-A-63198832
Patent Abstracts of Japan, vol. 3, no. 145 (E-155), 30 November 1979, & JP-A-54123085
Labor Praxis Spezial, 1988, M. Steinwand: "Diodenarray-Detektion in der HPLC mit der Empfindlichkeit eines variablen UV-Detektors", pages 90-92**

(73) Patentinhaber :
**KERNFORSCHUNGSZENTRUM KARLSRUHE GMBH
Postfach 36 40
D-76021 Karlsruhe (DE)**

(72) Erfinder : **RINKE, Günter
Traminerweg 3
D-7504 Weingarten (DE)**

(74) Vertreter : **Rückert, Friedrich, Dr.
Kernforschungszentrum Karlsruhe GmbH,
Patente und Lizenzen
Weberstrasse 5
D-76133 Karlsruhe (DE)**

EP 0 502 866 B1

EP 0 502 866 B1

## Beschreibung

Die Erfindung betrifft ein Zweistrahl-Spektrometer entsprechend dem Oberbegriff des Patentanspruchs. Ein solches Spektrometer besteht aus mindestens zwei Eintrittsspalten, einem Beugungsgitter, mindestens einem Photodiodenarray als optischer Detektor und einer Kollimationsoptik. Die Kollimation kann jedoch auch von einem konkaven Gitter übernommen werden. Üblicherweise wird dafür ein holographisches Konkavgitter verwendet, dessen Beugungsspektrum sich in einer Ebene befindet.

Ein Zweistrahl-Spektrometer gemäß dem Oberbegriff ist aus Applied Spectroscopy, Band 42, Nr. 8 (Dezember 1988) Society for Applied Spectroscopy, I. Zhu et al, Seiten 1567 - 1571, bekannt. Bei diesem Spektrometer werden Überlappungen der Spektren mathematisch korrigiert.

Solche als Spektralphotometer, -spektrometer oder auch Array-Spektrometer bezeichneten Meßgerate werden in der Laboranalytik und Prozeßmeßtechnik eingesetzt. Damit können Gase und Flüssigkeiten kontinuierlich gemessen werden, z. B. zur Überwachung der Emission von Schadgasen im Abgas eines mit fossilen Energieträgern betriebenen Kraftwerkes.

Ein weiteres Einsatzgebiet ist die Hochleistungsflüssigchromatographie HPLC (High Performance Liquid Chromatography), bei der die zu untersuchenden flüssigen Substanzgemische durch eine Trennsäule zeitlich nacheinander in ihre chemischen Komponenten aufgespalten und von einem UV-HPLC-Detektor in elektrische Signale umgewandelt werden. Ein solcher UV-HPLC-Detektor besteht aus einer ultravioletten Lichtquelle, einer Durchflußküvette, einem Spektrometer und mindestens einem Array-Detektor. Die wegen der schlechten Stabilität der UV-Lampe erforderliche Aufteilung in einen Meß- und Referenzstrahlengang wird durch einen Strahlteiler erreicht.

In der Zeitschrift Labor Praxis, Oktober 1988, Seiten 1091 bis 1094 sowie in dem Datenblatt der Fa. Milton Roy wird von dem Dioden-Array-Spektrophotometer "Spectronic 3000 Array" berichtet, das zwei Eintrittsspalten, ein Gitter und ein Array enthält. Bei dieser Anordnung handelt es sich jedoch nicht um ein Zweistrahl-Spektrometer, da die beiden Spalten nicht als Meß- und Referenzspalt dienen. Sie lassen vielmehr unterschiedliche Wellenlängen, sichtbares und ultraviolettes Licht, getrennt in das Spektrometer eintreten, die dann hintereinander auf einem Array abgebildet werden. Die Erfassung schneller Lichtquelleninstabilitäten ist damit nicht möglich.

Weiter wird in der Zeitschrift Labor-Praxis Spezial, 1988, Seiten 90 bis 92 sowie in dem Datenblatt der Fa. Perkin-Elmer von dem "LC-235" Dioden-Array berichtet. Dieses System besteht aus zwei übereinander angeordneten Eintrittsspalten, einem Gitter und zwei ebenfalls übereinander angeordneten Photodioden-Arrays. Auf diese Weise können auch sehr schnelle Lampenfluktuationen eliminiert werden.

In den Proceedings of SPIE 1988, Vol. 1013, Seiten 146 bis 153, wird ebenfalls ein Spektrometer mit mehreren Eintrittsspalten beschrieben, die allerdings auch übereinander angeordnet sind, so daß am Ausgang mehrere Arrays eingesetzt werden müssen.

Aus der US-PS 4,669,873 ist ein Spektrophotometer mit drei Eintrittsspalten, einem Gitter und einem Array bekannt. Mit dieser Anordnung kann jedoch immer nur ein Meßstrahl analysiert werden, da für eine gewisse Zeit nur ein Eintrittsspalt erleuchtet ist.

Von diesen Meßsystemen sind nur diejenigen in der Lage, ein Meß- und Referenzspektrum gleichzeitig aufzunehmen, die die Eintrittsspalte übereinander angeordnet haben und mindestens zwei Photodioden-Arrays oder Dual-Photodioden-Arrays verwenden, bei denen zwei Arrays in einem Gehäuse enthalten sind.

Diese Lösungen haben den Nachteil, daß für die erforderliche punktuelle Abbildung ein stigmatisches Spektrometer erforderlich ist. Weiterhin ist eine aufwendige Strahltrennung und - einkopplung in das Spektrometer sowie die getrennte Abbildung auf den Arrays nötig. Diese Anordnung ist teuer, insbesondere, wenn Dual-Photodioden-Arrays verwendet werden.

Aufgabe der Erfindung ist, die zwei Photodiodenarrays durch ein einziges Array zu ersetzen. Weiterhin sollen die Eintrittsspalten deutlich voneinander getrennt werden, um die aufwendige Strahltrennung überflüssig zu machen.

Diese Aufgabe wird erfindungsgemäß durch ein Zweistrahl-Spektrometer mit den im Kennzeichen des Patentanspruchs 1 genannten Merkmalen gelöst. Durch die geeignete Wahl der Winkel zwischen den Eintrittsspalten und dem Gitter werden die Spektren im entgegengesetzten Sinn auf ein einziges Array abgebildet.

Es kann somit ein einziges Array und eine einfachere Elektronik verwendet werden. Die erfindungsgemäße Meßanordnung läßt insbesondere die Verwendung einer gepulsten Xenonlampe zu. Bevorzugt werden die Wellenlängen von 200 nm bis 400 nm.

Die Berechnung aller erforderlichen Winkel wird anhand eines Ausführungsbeispiels erläutert. Zielvorgabe sei die Erfassung des Wellenlängenbereichs von 190 nm bis 350 nm mit einem Photodiodenarray, das aus 1024 Elementen besteht und 25,4 mm lang ist. Als Gitter kann beispielsweise ein konkaves Gitter mit 190 mm Brennweite und 360 Linien pro Millimeter verwendet werden, das für einen Einfallswinkel von -3,942° ein Spektrum in einer Ebene erzeugen kann. Für die optimale Berechnung der Winkel wird die bekannte Gittergleichung herangezogen, wobei die Vorzeichen der Winkel die Drehrichtung angeben:

$$\sin \alpha + \sin \beta = n\,k\,l$$

mit

α: Einfallswinkel zwischen Eintrittsspalt und Gitternormale

β: Ausfallswinkel zwischen Gitternormale und Austrittsspalt

n: Gitterordnung $(0, \pm1, \pm2, ...)$

k: Anzahl der Linien pro Millimeter

l: Wellenlänge.

Mit dieser Gleichung, den obigen Gitterdaten und dem geforderten Wellenlängenbereich sind die nötigen Winkel festgelegt. Für die Ordnungen +1 und -1 und einen Einfallswinkel für den zweiten Eintrittsspalt von -11,83° ergeben sich beispielsweise für die Endpunkte des Spektrums:

$$\beta\,(ES_1, n_{+1}, 190nm) = +\ 7,88°$$
$$\beta\,(ES_1, n_{+1}, 350nm) = +\ 11,23°$$
$$\beta\,(ES_1, n_{-1}, 190nm) = +\ 0,02°$$
$$\beta\,(ES_1, n_{-1}, 350nm) = -\ 3,28°$$
$$\beta\,(ES_2, n_{+1}, 190nm) = +\ 15,87°$$
$$\beta\,(ES_2, n_{+1}, 350nm) = +\ 19,33°$$
$$\beta\,(ES_2, n_{-1}, 190nm) = +\ 7,85°$$
$$\beta\,(ES_2, n_{-1}, 350nm) = +\ 4,53°$$

Die Parameter in Klammern geben die Nummer des Eintrittsspaltes, die Ordnung und die Wellenlänge an.

Aus diesen Werten wird deutlich, das das Spektrum des Eintrittsspaltes 1 und der Ordnung +1 direkt neben dem Spektrum des Eintrittsspaltes 2 mit der Ordnung -1 in umgekehrter Richtung liegt und beide Spektren zusammen einen Winkelbereich von 11,23° bis 4,53° = 6,7° überstreichen. Bei der Brennweite von 190 mm entspricht dies etwa 22,5 mm, so das beide Spektren auf das Array mit 25 mm Länge passen.

Für andere Gitter kann die generelle Berechnung aller Winkel analog diesem Beispiel durchgeführt werden. Bedingung für den Eintrittswinkel des zweiten Eintrittsspaltes ist in diesem Fall, daß sich das Spektrum dieses Eintrittsspaltes genau an das des ersten Eintrittsspaltes anschließt. Das Gitter selber muß aufgrund der gewünschten Dispersion und des Blaze-Winkels ausgewählt werden.

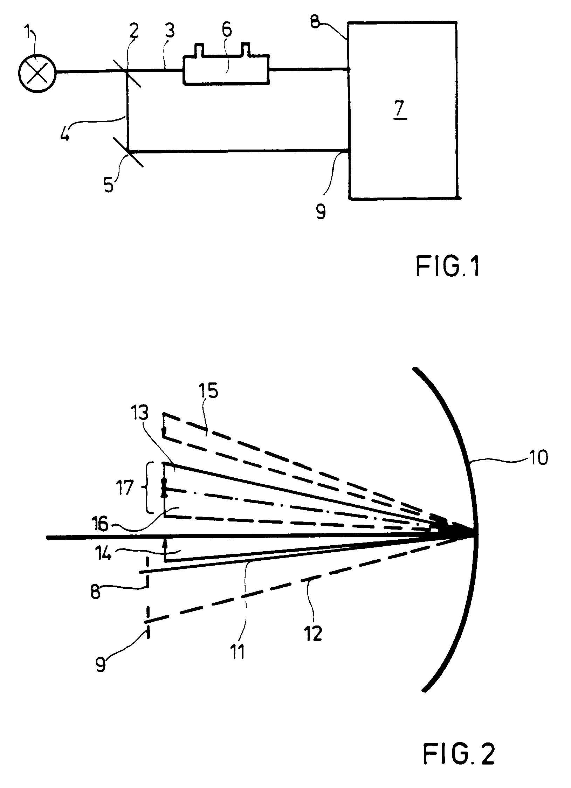

Die Erfindung wird im folgenden anhand eines weiteren Ausführungsbeispiels und anhand der Figuren 1 und 2 näher erläutert.

Fig. 1: Zweistrahlspektrometer, schematisch

Fig. 2: Erfindungsgemäße Anordnung

Fig. 1 zeigt schematisch ein Zweistrahlspektrometer mit der Lichtquelle 1, einem Strahlteiler 2, der einen Meßstrahl 3 und einen Referenzstrahl 4 erzeugt, einer Umlenkoptik 5, einer Meßzelle 6 und einem Spektrometer 7, das einen ersten Eintrittsspalt 8 für den Meßstrahl 3 und einen zweiten Eintrittsspalt 9 für den Referenzstrahl 4 aufweist.

In der Figur 2 ist die erfindungsgemäße Anordnung dargestellt. Der Meßstrahl 3 gelangt über den Eintrittsspalt 8 als Strahl 11 in das Spektrometer 7 auf das konkave Gitter 10 und wird von diesem in eine Spektrum 13 der Ordnung +1 und ein Spektrum 14 der Ordnung -1 zerlegt. Analog dazu gelangt der Referenzstrahl 4 über den Eintrittsspalt 9 als Strahl 12 in das Spektrometer 7 auf das konkave Gitter 10 und wird von diesem in ein Spektrum 16 der Ordnung -1 und ein Spektrum 15 der Ordnung +1 zerlegt. Die eingezeichneten Pfeile geben die Richtung des Spektrums an, wobei die Pfeilspitze einer Wellenlänge von 190 nm und das Pfeilende einer Wellenlänge von 350 nm entspricht.

Besonders zu beachten ist, daß die beiden Spektren 13 und 16 in entgegengesetzter Richtung auf einem Array 17 abgebildet werden. Eine Überlappung in der Mitte, entsprechend Wellenlängen kleiner als 190 nm ist dabei nicht möglich, da diese von der Luft absorbiert werden. Die höheren Gitterordnungen stören ebenfalls nicht, solange der Meßbereich nicht über 380 nm erweitert wird.

Das erfindungsgemäße Zweistrahl-Spektrometer weist folgende Vorteile im Vergleich zu Zweistrahl-Spektrometern mit zwei Arrays auf:

- nur ein Array und ein Gitter erforderlich
- geringerer elektronischer Aufwand (ein Vorverstärker, ein A/D-Wandler)
- kein unterschiedliches Verhalten von Meß- und Referenzkanal durch Driften zweier Verstärker oder A/D-Wandler oder durch Unterschiede zwischen zwei Arrays
- kein stigmatisch abgebildetes Gitter erforderlich
- gut getrennte Eintrittsspalte, daher einfache Strahlteilung möglich.

Die hier dargestellte Anordnung mit einem konkaven Gitter, dessen Beugungsspektrum sich in einer Ebene

EP 0 502 866 B1

befindet, ist nur eine Möglichkeit zur Realisierung des Verfahrens. Eine weitere Möglichkeit besteht z. B. darin, ein Plangitter mit entsprechender Kollimationsoptik, z. B. in Czerny-Turner-Anordnung, zu verwenden. In diesem Fall sind die Berechnungen der Winkel dieselben, es muß lediglich noch dafür gesorgt werden, daß ein flaches Spektrum entsteht. Durch Wahl der Abstände der optischen Bauelementen kann dies erreicht werden und ist Stand der Technik.

Eine Weiterbildung für größere Wellenlängen, bei denen eine Überlappung der Spektren in der Mitte des Arrays zu erwarten ist, besteht in der zusätzlichen Verwendung eines optischen Kantenfilters. Dieses Filter muß diejenigen Wellenlängen absorbieren, die kleiner sind als die zu erfassende kürzeste Wellenlänge. Dieses Filter kann vorteilhaft zwischen der Lichtquelle 1 und dem Strahlteiler 2 angeordnet werden.

Bezugszeichenliste:

1 Lichtquelle
2 Strahlteiler
3 Meßstrahl
4 Referenzstrahl
5 Umlenkoptik
6 Meßzelle
7 Spektrometer
8 Eintrittsspalt für Meßstrahl
9 Eintrittsspalt für Referenzstrahl
10 Konkaves Gitter
11 Eintretender Meßstrahl (3)
12 Eintretender Referenzstrahl (4)
13 Array-Spektrum vom Meßstrahl (Ordnung: +1)
14 Array-Spektrum vom Neßstrahl (Ordnung: -1)
15 Array-Spektrum vom Referenzstrahl (Ordnung: +1)
16 Array-Spektrum vom Referenzstrahl (Ordnung: -1)
17 Auswertearray
Die Pfeile geben den Wellenlängenbereich von 190 nm (Pfeilspitze) bis 350 nm (Pfeilende) an.


**Patentansprüche**

1. Zweistrahl-Spektrometer mit
   a) einer Lampe (1), einem Strahlteiler (2), der den Strahl der Lampe (1) in einen Meßstrahl (3) und einen Referenzstrahl (4) aufteilt, einer Umlenkoptik (5),
   b) einer Meßzelle (6), die vom Meßstrahl (3) durchstrahlt wird, und
   c) einem Spektrometer (7), bestehend aus
   d) einem ersten Eintrittsspalt (8), der den Meßstrahl (3) nach Durchlaufen der Meßzelle (6) in das Spektrometer (7) eintreten läßt,
   e) einem zweiten Eintrittsspalt (9), der den Referenzstrahl (4) in das Spektrometer (7) eintreten läßt,
   f) einem optischen Gitter (10), das sowohl den Meßstrahl (3) als auch den Referenzstrahl (4) spektral zerlegt und aus beiden Strahlen jeweils ein Spektrum bildet, und
   g) mindestens einem Array-Detektor, der die Spektren des Meßstrahls (3) und des Referenzstrahls (4) gleichzeitig registriert, wobei
   h) der zweite Eintrittsspalt (9) getrennt vom ersten Eintrittsspalt (8) angeordnet ist und
   i) die beiden Eintrittsspalte (8, 9), der Mittelpunkt des Gitters (10) und die Spektren des Meß- und Referenzstrahls (3, 4) in einer Ebene liegen,
   dadurch gekennzeichnet, daß
   j) die beiden Eintrittsspalte (8, 9) gegenüber der Gitternormalen in einem solchen Winkel angeordnet sind, daß sich das Spektrum des Meßstrahles (3) der Ordnung +1 unmittelbar an das Spektrum des Referenzstrahls (4) der Ordnung -1 in umgekehrter Richtung anschließt und
   k) die Spektren des Meß- und Referenzstrahls (3, 4) auf einen einzigen Array-Detektor abgebildet und von diesem registriert werden.

2. Zweistrahl-Spektrometer nach Anspruch 1, dadurch gekennzeichnet, daß als optisches Gitter (10) ein konkaves Gitter verwendet wird, dessen Beugungsspektrum sich in einer Ebene befindet.

4

**3.** Zweistrahl-Spektrometer nach Anspruch 1 oder 2, dadurch gekennzeichnet, daß zwischen Lampe (1) und Strahlteiler (2) ein Kantenfilter angeordnet wird, das alle Wellenlängen des von der Lampe (1) ausgehenden Lichts absorbiert, die kleiner als die kürzeste zu erfassende Wellenlänge sind.

## Claims

**1.** Double-beam spectrometer, having

a) a lamp (1), a beam splitter (2) which divides the beam of the lamp (1) into a measurement beam (3) and a reference beam (4), a deflection optical system (5),

b) a measuring cell (6) which has the measurement beam (3) shining therethrough, and

c) a spectrometer (7) comprising

d) a first entry slit (8) which permits the measurement beam (3) to enter the spectrometer (7) after traversing the measuring cell (6),

e) a second entry slit (9) which permits the reference beam (4) to enter the spectrometer (7),

f) an optical grating (10) which spectrally splits-up both the measurement beam (3) and the reference beam (4) and forms a spectrum from each of the two beams, and

g) at least one array detector which simultaneously records the spectra of the measurement beam (3) and the reference beam (4),

h) the second entry slit being disposed separately from the first entry slit (8), and

i) the two entry slits (8, 9), the centre of the grating (10) and the spectra of the measurement and reference beams (3, 4) lying in one plane,

characterised in that

j) the two entry slits (8, 9) are disposed at such an angle relative to the grating normals that the spectrum of the measurement beam (3) of the order +1 communicates directly with the spectrum of the reference beam (4) of the order -1 in the reverse direction, and

k) the spectra of the measurement and reference beams (3, 4) are illustrated on a single array detector and recorded thereby.

**2.** Double-beam spectrometer according to claim 1, characterised in that a concave grating is used as the optical grating (10), the diffraction spectrum of which is situated in one plane.

**3.** Double-beam spectrometer according to claim 1 or 2, characterised in that a cut-on filter is disposed between lamp (1) and beam splitter (2) and absorbs all of the wavelengths of the light emerging from the lamp (1) which are smaller than the shortest wavelength to be detected.

## Revendications

**1.** Spectromètre à double faisceau comportant :

a) une lampe (1), un séparateur de faisceau (2) qui répartit le faisceau de la lampe (1) en un faisceau de mesure (1) et un faisceau de référence (4), une optique de déviation (5),

b) une cellule de mesure (6), qui est traversée par le faisceau de mesure (3), et

c) un spectromètre (7), se composant de

d) une première fente d'entrée (8), qui laisse entrer le faisceau de mesure (6) dans le spectromètre (7),

e) une deuxième fente d'entrée (9), qui laisse entrer le faisceau de référence (4) dans le spectromètre (7),

f) un réseau optique (10), qui décompose de manière spectrale aussi bien le faisceau de mesure (3) que le faisceau de référence (4) et forme à partir des deux faisceaux respectivement un spectre, et

g) au moins un détecteur de zone, qui enregistre en même temps les spectres du faisceau de mesure (3) et du faisceau de référence (4), dans lequel

h) la deuxième fente d'entrée (9) est disposée séparée de la première fente d'entrée (8) et

i) les deux fentes d'entrée (8, 9), le point central du réseau (10) et les spectres du faisceau de mesure et du faisceau de référence (3, 4) sont situés dans un plan,

caractérisé en ce que

j) les deux fentes d'entrée (8, 9) sont disposées par rapport à la normale au réseau dans un angle tel, que le spectre du faisceau de mesure (3) d'ordre +1 se rattache directement au spectre du faisceau de référence (4) d'ordre -1 en sens inverse et

k) les spectres du faisceau de mesure et du faisceau de référence (3, 4) sont représentés sur un détecteur de zone unique et enregistrés par celui-ci.

2. Spectromètre à double faisceau selon la revendication 1, caractérisé en ce que comme réseau optique (10) on utilise un réseau concave, dont le spectre de diffraction se trouve dans un plan.

3. Spectromètre à double faisceau selon les revendications 1 ou 2, caractérisé en ce que, entre la lampe (1) et le séparateur de faisceau (2) est disposé un filtre à arêtes, qui absorbe toutes les longueurs d'onde de la lumière provenant de la lampe (1), qui sont plus petites que la longueur d'onde la plus courte à saisir.

FIG.1

FIG.2